# EUROPEAN PATENT SPECIFICATION

(11) **EP 2 960 977 B1**
(45) Date of publication and mention of the grant of the patent: **18.12.2019**
(21) Application number: 14174663.6
(22) Date of filing: 27.06.2014
(51) Int. Cl.: H01M 4/88, H01M 8/1213, C25B 9/08, H01M 4/86, H01M 4/90, H01M 8/124

(54) **ANODE SUPPORT CREEP**
ANODENTRÄGERKRIECHEN
FLUAGE DE SUPPORT D'ANODE

(43) Date of publication of application: 30.12.2015
(73) Proprietor: Haldor Topsøe A/S, 2800 Kgs. Lyngby (DK)
(72) Inventor: Heiredal-Clausen, Thomas, 2100 Copenhagen Ø (DK); Lund Frandsen, Henrik, 2800 Kgs. Lyngby (DK); Petersen, Thomas Karl, 2800 Kgs. Lyngby (DK); Madsen, Mads FInd, 2800 Kgs. Lyngby (DK)

(56) References cited:
- EP-A1- 1 928 049
- EP-A1- 2 104 165
- WO-A1-2011/060756
- WO-A1-2011/137916
- WO-A1-2013/052938
- JP-A- 2003 263 996
- US-A1- 2010 159 356
- US-A1- 2014 178 799

## Description

### FIELD OF THE INVENTION

The invention relates to a production process for a solid oxide cell (SOC), in particular a solid oxide fuel cell (SOFC) stack system or a solid oxide electrolysis cell (SOEC) stack system. Specifically the invention concerns a process to control the anode support creep during reduction to control thermo-mechanical stress in cells in SOC stacks.

### BACKGROUND OF THE INVENTION

In the following, the structure of a solid oxide cell stack is explained in relation to fuel cells. The fuel cells may however also run in "reverse mode" and thus operate as electrolysis cells.

A Solid Oxide Fuel Cell (SOFC) comprises a solid electrolyte that enables the conduction of oxygen ions, a cathode where oxygen is reduced to oxygen ions and an anode where hydrogen is oxidised. The overall reaction in an SOFC is that hydrogen and oxygen electrochemically react to produce electricity, heat and water. In order to produce the required hydrogen, the anode normally possesses catalytic activity for the steam reforming of hydrocarbons, particularly natural gas, whereby hydrogen, carbon dioxide and carbon monoxide are generated. Reforming of methane, the main component of natural gas, can be described by the following reactions:

CH₄ + H₂O → CO + 3H₂ (steam reforming)

CH₄ + CO₂ → 2CO + 2H₂ (dry reforming)

CO + H₂O → CO₂ + H₂ (water-gas-shift)

During operation an oxidant such as air is supplied to the solid oxide fuel cell in the cathode region. Fuel such as hydrogen is supplied in the anode region of the fuel cell. Alternatively, a hydrocarbon fuel such as methane is supplied in the anode region, where it is converted to hydrogen and carbon oxides by the above reactions. Hydrogen passes through the porous anode and reacts at the anode/- electrolyte interface with oxygen ions generated on the cathode side that have diffused through the electrolyte. Oxygen ions are created in the cathode side with an input of electrons from the external electrical circuit of the cell.

To increase voltage, several cell units are assembled to form a stack and are linked together by interconnects. Interconnects normally serve as a gas barrier to separate the anode (fuel) and cathode (air/oxygen) sides of adjacent cell units, and at the same time they enable current conduction between the adjacent cells, i.e. between an anode of one cell with a surplus of electrons and a cathode of a neighbouring cell needing electrons for the reduction process. Further, interconnects are normally provided with a plurality of flow paths for the passage of fuel gas on one side of the interconnect and oxidant gas on the opposite side.

The way the anode and cathode gas flows are distributed in an SOFC stack is by having a common manifold for each of the two process gasses. The manifolds can either be internal or external. The manifolds supply process gasses to the individual layers in the SOFC stack by the means of channels to each layer. The channels are normally situated in one layer of the repeating elements which are comprised in the SOFC stack, i.e. in the spacers or in the interconnect. The SOC is a combination of several layers all with different coefficients of thermal expansion (CTE).

During production of the SOC, the layers are sintered together in a way that puts the thin electrolyte in compression by the thicker Anode Support. This is achieved by sintering the layers together at high temperature (app. 1200°C) and by the fact that the coefficient of thermal expansion (CTE) of the electrolyte is lower than the Anode Support. This means that the Anode Support will contract more than the electrolyte during cooling from the 1200°C, and thereby put the electrolyte in compression.

The reason for putting the thin electrolyte under compression by the Anode Support is that the thin layer will fracture easily if it is under tension, whereas the thick Anode Support can handle the tension better. The electrolyte will be in compression for all temperatures below the sintering temperature, but will be in tension at temperatures above the sintering temperature.

In the sintering stage, the Anode Support comprises a cermet of NiO and YSZ. To activate the Anode and Anode Support, the NiO has to be reduced into Ni. This reduction of the SOC is done after assembly and conditioning of the SOC stack at a temperature above 500°C - the reduction temperature.

It has been discovered that the Anode Support creeps very fast during the beginning of the reduction of NiO to Ni, which means that the internal stress in the SOC is relaxed, the electrolyte is no longer in compression by the Anode Support!

When the first part of the reduction is done, the creep rate of the Anode is "back to normal", which means that in a practical aspect, it does not creep anymore. This means that cooling the stack from the reduction temperature will again put the electrolyte under compression, because of the difference in TEC between the Anode Support and the electrolyte. But as the case was with the sintering temperature, the electrolyte is only in compression for temperatures below the reduction temperature.

When the SOC stack is put into operation, it is vital for the integrity of the electrolyte that it is under compression in all places at all times. The operation temperature of the SOC stack compared to the reduction temperature is thus an important parameter in order to avoid electrolyte fracture.

US2009221421 describes a catalyst for producing hydrogen comprising a porous body, as a support, comprising either one of an amorphous phase oxide and a composite oxide containing titanium and zirconium in which titanium has a mol ratio of 5 to 75 percent and zirconium has a mol ratio of 25 to 95 percent to the sum of these two, the porous body having a micro-hole diameter distribution peak in the range of 3 nm to 30 nm; and catalytic active metal grains carried on the a gas contact surface of the support, and the catalytic active metal has a content of 1 to 30 percent by mass to the sum of the porous body and the catalytic active metal, and a method of manufacturing thereof. This suppresses sintering or coking causing activity deterioration, thereby minimizing reaction ratio variations with time. A fuel reformer having the above catalyst, and a fuel cell having the fuel reformer are also described.

In US2002177032 an electrode layer for fuel cells which is improved in the efficiency of a catalyst, the diffusion capability of fuel, the stabilization and the high output is disclosed. An electrode for fuel cells which consists of current collector layer which consists of a conductive fiber, and a catalyst layer formed on current collector layer, the conductivity of the thickness direction of the layer in a catalyst layer is raised by using the carbon nano fiber which grew perpendicularly to plane of current collector as a catalyst layer.

US2009068523 discloses a fuel electrode for a solid oxide electrochemical cell including: an electrode layer 12 constituted of a mixed phase including an oxide having mixed conductivity and another oxide selected from the group including an aluminum-based oxide and a magnesium-based composite oxide, said another oxide having, supported on a surface part thereof, particles of at least one member selected from nickel, cobalt, and nickel-cobalt alloys; a meshy wiring formed on a surface layer part of the electrode layer and made of a material having higher electronic conductivity than the electrode layer; and a current collector which overlies the electrode layer and is in contact with at least the wiring.

US2010028757 relates to an anode for a high-temperature fuel cell having an anode substrate and/or a functional anode layer, comprising a porous ceramic structure having a first predominantly electron-conducting phase with the general empirical formula Sr1-xLnxTiO3 wherein Ln=Y, Gd to Lu and 0.03<x<0.2, and having a second predominantly ion-conducting phase component comprising yttrium or scandium-stabilized zirconium dioxide (YSZ or ScSZ). In the anode substrate and/or the functional anode layer, the ratio by volume of the first phase to the second phase ranges from 80:20 to 50:50, and particularly from 70:30 to 60:40. The porosity of the entire anode ranges between 15 and 50 percent by volume. The anode additionally comprises a catalyst in the amount of no more than 15 percent of the total volume, which is disposed on the surface of the pores of the ceramic structure.

EP2104165 discloses an all ceramics solid oxide cell, comprising an anode layer, a cathode layer, and an electrolyte layer sandwiched between the anode layer and the cathode layer, wherein the electrolyte layer comprises doped zirconia and has a thickness of from 40 to 300 micro m; wherein the anode layer and the cathode layer both comprise doped ceria or both comprise doped zirconia; and wherein the multilayer structure formed of the anode layer, the electrolyte layer and the cathode layer is a symmetrical structure.

WO2013052938 describes a method for forming a solid oxide fuel cell (SOFC) article includes forming a SOFC unit cell in a single, free-sintering process, wherein the SOFC unit cell is made of an electrolyte layer, an interconnect layer, a first electrode layer disposed between the electrolyte layer and the interconnect layer. The electrolyte layer of the SOFC unit cell is in compression after forming.

None of the above described known art provides a solution to the above described problems of keeping the electrolyte under compression at all times of operation of the SOC or SOC stack.

With reference to the above listed considerations, there is a need for a method to ensure that the operation temperature of the SOC at all times anywhere in the SOC is lower than the reduction temperature to ensure compression of the electrolyte to avoid fracture.

These and other objects are achieved by the invention as described below.

### SUMMARY OF THE INVENTION

During operation of the SOC, a temperature profile is present across the cell, and the maximum temperature of the profile should always be lower than the reduction temperature.

The invention is to use the knowledge about the Anode Support creep during reduction to design a reduction process, where the temperature during the beginning of the reduction is kept higher, with a safety margin, than the highest temperature during normal operation. The reduction process should not necessarily compensate for any unforeseen operation situation. If operation instructions are not complied with, or if a break-down of a support system component occurs, the temperature of the SOC may rise above the intended operation temperature. However this is not a normal occurrence, and the present invention does not necessarily provide a solution for unexpected temperature occurrences, since that would mean a reduction process with high temperatures and an undefined temperature regime, since it is not known what temperatures would occur at unexpected operation situations. The present invention is therefore designed for the intended, expected operation temperatures of an SOC and an SOC stack.

In an embodiment of the invention, the SOC stack is reduced at app. 810°C and operated at a maximum temperature of app. 800°C.

The scope of the present invention is defined by the appended claim.

### BRIEF DESCRIPTION OF THE DRAWINGS

The invention is further illustrated by the accompanying drawing showing an example of an embodiment of the invention.

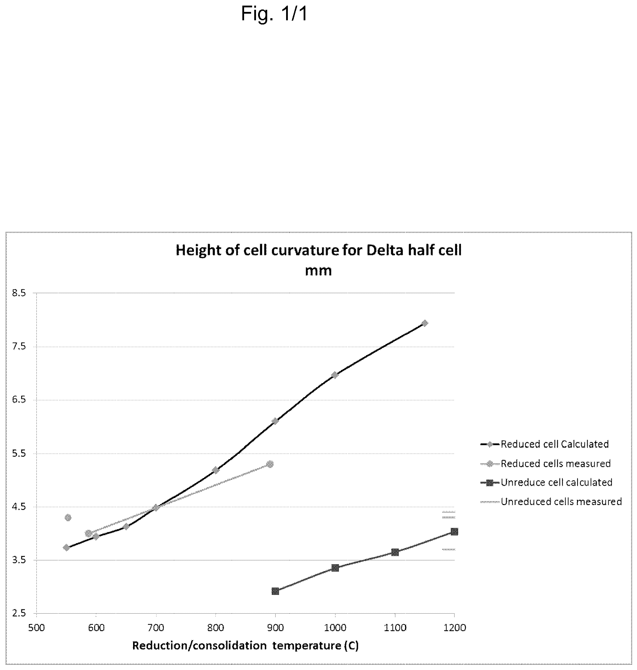

Fig. 1 shows a diagram of the effect of different reduction temperatures of an SOC.

### DETAILED DESCRIPTION

The diagram of Fig. 1 has on the X-axis the reduction temperature and on the Y-axis the height of the cell curvature for a half cell according to the invention.

To investigate the Anode Support creep as described above, the effect of different reduction temperatures were modelled and tested on three SOC stacks.

Curvature of the cells was used as a measure of the internal stress in the cells at room temperature caused by the difference in coefficient of thermal expansion (CTE).

Fig. 1 shows a plot of the results. The lower curve represents the modelled curvature of the TOFC cells unreduced after sintering as a function of sintering temperature.

The three short lines at the far right (1200°C) of the diagram show the measured curvature of the cells used in the experiments sintered at app. 1200°C.

The longest, top curve shows the calculated curvature of the reduced cells as a function of reduction temperature, assuming that Anode Support creep happens and the cell is relaxed at the reduction temperature.

The three round markers and the middle curve is the experimental data after varying the reduction temperature, which is in good consistency with the calculated values. This proofs the theory of the invention is working in practice.

## Claims

1. Process for activating an anode and an anode support comprised in a Solid Oxide Cell by reduction of the Solid Oxide Cell, the Solid Oxide Cell further comprising an electrolyte and a cathode, the process comprising the step of -
• heating the Solid Oxide Cell to a reduction temperature higher than the maximum intended operation temperature of the Solid Oxide Cell, whereby the electrolyte is kept under compression by the anode support during operation, wherein the reduction temperature of the Solid Oxide Cell is above 500°C, above 700°C, above 750°C, or above 800°C
and wherein the anode support comprises a cermet of NiO and YSZ and the activation is done by reducing the NiO into Ni and the coefficient of thermal expansion (CTE) of the electrolyte is lower than the coefficient of thermal expansion (CTE) of the anode support.

## Patentansprüche

1. Verfahren zur Aktivierung einer Anode und eines Anodenträgers, die in einer Festoxidzelle enthalten sind, durch Reduktion der Festoxidzelle, wobei die Festoxidzelle ferner einen Elektrolyten und eine Kathode umfasst, wobei das Verfahren den folgenden Schritt umfasst:
• Erwärmen der Festoxidzelle auf eine Reduktionstemperatur, die höher ist als die maximal vorgesehene Betriebstemperatur der Festoxidzelle, wobei der Elektrolyt während des Betriebs durch den Anodenträger unter Druck gehalten wird, wobei die Reduktionstemperatur der Festoxidzelle über 500°C, über 700°C, über 750°C oder über 800°C liegt
und wobei der Anodenträger ein Cermet aus NiO und YSZ umfasst und die Aktivierung durch Reduzieren des NiO zu Ni erfolgt und der Wärmeausdehnungskoeffizient (CTE) des Elektrolyten niedriger ist als der Wärmeausdehnungskoeffizient (CTE) des Anodenträgers.

## Revendications

1. Procédé pour activer une anode et un support d'anode compris dans une cellule d'oxyde solide par réduction de la cellule d'oxyde solide, la cellule d'oxyde solide comprenant en outre un électrolyte et une cathode, le procédé comprenant l'étape de
• chauffage de la cellule d'oxyde solide à une température de réduction supérieure à la température de fonctionnement prévue maximale de la cellule d'oxyde solide, l'électrolyte étant maintenu sous compression par le support d'anode pendant le fonctionnement, la température de réduction de la cellule d'oxyde solide étant supérieure à 500°C, supérieure à 700°C, supérieure à 750°C ou supérieure à 800°C
et le support d'anode comprenant un cermet de NiO et d'YSZ et l'activation étant effectuée par la réduction de NiO en Ni et le coefficient de dilatation thermique (CDT) de l'électrolyte étant inférieur au coefficient de dilatation thermique (CDT) du support d'anode.
